# EUROPÄISCHE PATENTSCHRIFT

(11) **EP 0 618 031 B1**
(45) Veröffentlichungstag und Bekanntmachung des Hinweises auf die Patenterteilung: **18.09.1996**
(21) Anmeldenummer: 94108513.6
(22) Anmeldetag: 12.04.1991
(51) Int. Cl.: B23B 45/16, B25D 16/00, B28D 1/14

(54) **Handbohrmaschine und deren Werkzeughalter**
Hand-held drilling machine and its tool holder
Perceuse tenue à la main et son porte-outil

(30) Priorität: 08.05.1990 DE 4014633; 12.02.1991 DE 4104131
(43) Veröffentlichungstag der Anmeldung: 05.10.1994
(62) Teilanmeldung aus: 91105845.1
(73) Patentinhaber: ROBERT BOSCH GMBH, 70442 Stuttgart (DE)
(72) Erfinder: Reibetanz, Wilbert, Dipl.-Ing., D-70771 Leinfelden-Echterdingen (DE); Wanner, Karl, Dr.-Ing., D-70771 Leinfelden-Echterdingen (DE); Baumann, Otto, D-70771 Leinfelden-Echterdingen (DE); Müller, Rolf, Dipl.-Ing., D-70771 Leinfelden-Echterdingen (DE)

(56) Entgegenhaltungen:
- EP-A- 0 108 411
- DE-A- 3 443 138
- DE-A- 3 503 921
- DE-C- 3 510 711

## Beschreibung

Die Erfindung geht aus von einer Handbohrmaschine nach der Gattung des Anspruchs 1 bzw. von deren Werkzeughalter nach der Gattung des Anspruchs 2. Aus der DE 35 10 711 C1 ist bereits eine Handbohrmaschine mit einem Werkzeughalter gemäß der Oberbegriffe der Ansprüche 1 und 2 bekannt, der mit einer als Bohrfutter ausgebildeten ersten Werkzeugaufnahme für Rundschaftwerkzeuge und mit einer zweiten Werkzeugaufnahme für Werkzeuge mit Nutenschaft versehen ist. Die zweite Werkzeugaufnahme hat einen radial versetzbaren Mitnehmer zum Eingriff in eine Nuttasche eines einzusetzenden Werkzeugschaftes. Der Mitnehmer ist in einem radialen Durchbruch eines Futterkörpers axial hinter einem Zahnkranz zum Einstellen der Futterbacken der ersten Werkzeugaufnahme angeordnet. Der Werkzeughalter weist daher eine große axiale Baulänge zwischen erster und zweiter Werkzeugaufnahme auf.

### Vorteile der Erfindung

Die erfindungsgemäße Handbohrmaschine mit den kennzeichnenden Merkmalen des Anspruchs 1 bzw. deren Werkzeughalter mit den kennzeichnenden Merkmalen des Anspruchs 2 hat demgegenüber den Vorteil, daß zwischen erster und zweiter Werkzeugaufnahme ein geringer axialer Abstand vorliegt. Darüber hinaus wird eine funktionssichere automatische Verriegelung eines in den Werkzeughalter einzusetzenden Werkzeugschaftes mittels wenigstens eines Verriegelungskörpers gewährleistet, wobei lediglich eine einteilige Haltehülse zur Sicherung des Verriegelungskörpers erforderlich ist.

Durch die in den abhängigen Ansprüchen aufgeführten Maßnahmen sind vorteilhafte Weiterbildungen und Verbesserungen des im Anspruch 2 angegebenen Werkzeughalters möglich.

### Zeichnung

Zwei Ausführungsbeispiele der Erfindung sind in der Zeichnung dargestellt und in der nachfolgenden Beschreibung näher erläutert. Figur 1 zeigt einen Schnitt durch den vorderen Teil eines Bohrhammers, Figur 2 ein erstes Ausführungsbeispiel und Figur 3 ein zweites Ausführungsbeispiel einer erfindungsgemäßen Handbohrmaschine bzw. deren Werkzeughalters.

### Beschreibung der Ausführungsbeispiele

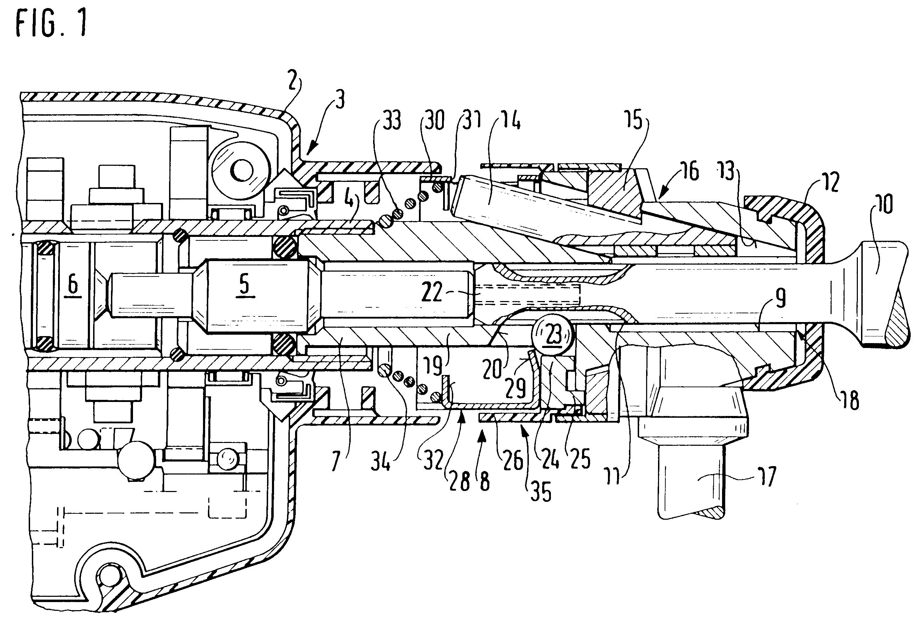

Anhand des in Figur 1 dargestellten Bohrhammers soll zunächst der prinzipielle Aufbau eines Werkzeughalters gemäß der EP-Stammanmeldung NR. 91 105 845.1 (Veröffentlichungsnummer: 0 456 003) beschrieben werden. Der Bohrhammer weist ein zweischaliges Gehäuse 2 auf, in dem ein nicht gezeigter Motor und ein Schlagwerk 3 untergebracht sind. Der Motor treibt eine rohrförmige Hammerhülse 4 an, die das Schlagwerk 3 umgibt. Von dem Schlagwerk 3 ist ein Döpper 5 gezeigt, der von einem Schläger 6 periodisch beaufschlagt wird. Statt des gezeigten Schlagwerks kann ebensogut ein Rasten- oder ein Federschlagwerk Verwendung finden.

Mit der Hammerhülse 4 ist ein Grundkörper 7 einer Werkzeughalterung 8 fest und spielfrei verbunden bzw. verschraubt. In Verlängerung des Döppers 5 weist der Grundkörper 7 eine Aufnahmebohrung 9 zum Einsetzen von Bohr- und/oder Schlagwerkzeugen auf. Diese weisen beispielsweise als Nutenschaftwerkzeuge 10 am Schaft beidseitig geschlossene Verriegelungsnuten 11 auf. An seinem dem Schlagwerk 3 abgewandten vorderen Ende hat der Grundkörper 7 eine Staubschutzkappe 12. In seinem vorderen Bereich weist der Grundkörper 7 drei schräg nach vorne innen zulaufende Führungsbahnen 13 für drei bewegliche Spannbacken 14 auf. Die Spannbacken 14 sind in üblicher Weise an ihrer Rückseite verzahnt und mittels eines Zahnkranzes 15 verstellbar. Die Teile 7 und 13 bis 15 bilden zusammen ein Backenfutter 16. Rundschaftwerkzeuge sind darin mittels eines Bohrfutterschlüssels 17 spannbar. Der Spannbereich des Backenfutters 16 liegt, der Einsteckseite 18 der Werkzeughalterung 8 nächstgelegen, dort, wo die Spannbacken 14 auf den Werkzeugschaft auftreffen.

Von der Einsteckseite 18 her gesehen hinter dem Spannbereich des Backenfutters 16 weist der Grundkörpers 7 ein rückwärtiges Rohrteil 19 auf. Dieses ist an einer Seite in Längsrichtung abgeflacht. Auf der abgeflachten Seite hat der Grundkörper 7 in unmittelbarer Nähe des Zahnkranzes 15 einen mit der Aufnahmebohrung 9 in Verbindung stehenden Längsschlitz 20. Außerdem weist der Grundkörper 7 im Bereich des Längsschlitzes 20 leistenförmige Einsätze 22 auf, die der Drehmitnahme des eingesetzten Nutenschaftwerkzeugs 10 dienen. In dem Längsschlitz 20 befindet sich ein Verriegelungskörper 23, der als Kugel oder Walze ausgebildet sein kann. Der Verriegelungskörper 23 wird in seiner in Figur 1 gezeigten Verriegelungsstellung in radialer Richtung von einem Sperrelement 24 überdeckt. Dieses ist als Nase an einer Schiebehülse 25 angebracht, die an ihrem Umfang mit einer Betätigungshülse 26 aus Kunststoff versehen ist und nach vorne an dem Zahnkranz 15 anliegt. Nach hinten in Richtung auf das Schlagwerk 3 liegt an der Schiebehülse 25 eine Haltehülse 28 an. Die Haltehülse 28 weist eine Nase 29 auf, die im Bereich der abgeflachten Seite des Grundkörpers 7 radial nach innen über das Sperrelement 24 der Schiebehülse 25 hervorsteht. Die aus Blech gestanzte und gerollte Haltehülse 28 besteht aus einem langgestreckten rohrförmigen Körper 30, der bis über das hintere Ende der Spannbacken 14 hinausreicht. Er weist Durchbrüche 31 zum Durchtritt der Spannbacken 14 auf. Hinter bzw. zwischen den Spannbacken 14 sind vom Körper 30 weg Lappen 32 nach innen gebogen. Gegen die Lappen 32 und den hinteren Teil des Körpers 30 ist eine Druckfeder 33 angelegt, die mit ihrem anderen Ende gegen einen in dem Grundkörper 7 angeordneten Sprengring 34 abgestützt ist. Die Teile 7 und 22 bis 28 bilden eine Werkzeugaufnahme 35 zum Halten von Nutenschaftwerkzeugen. Die Werkzeugaufnahme 35 ist unmittelbar hinter dem Spannbereich des Backenfutters 16 angeordnet.

Zum Drehbohren mit Rundschaftbohrern ohne Schlag werden diese Werkzeuge in das Backenfutter 16 eingesetzt und mit dem Bohrfutterschlüssel 17 gespannt. Wegen der festen Verbindung des Futter- bzw. Grundkörpers 7 mit der antreibenden Hammerhülse werden für Rundschaftbohrer hervorragende Rundlaufeigenschaften erzielt.

Zum Meißeln oder Schlagbohren werden Nutenschaftwerkzeuge 10 wie zum Beispiel SDS-Plus Bohrer gemäß DE-PS 25 51 125 verwendet. Diese Werkzeuge 10 werden bei geöffneten Spannbacken 14 in die Aufnahmebohrung 9 eingeschoben und solange verdreht, bis die Verriegelungsnuten 11 am Werkzeug 10 in die leistenförmigen Einsätze 22 einrasten. Der Benutzer braucht also nicht auf die richtige Lage der Nuten 11 des Werkzeugschaftes zur Werkzeughalterung 35 zu achten, sondern findet die richtige Lage "blind" durch eine Drehung des Werkzeugs 10 um maximal 180^{o}. Beim weiteren Einschieben des Werkzeugs 10 drückt das Schaftende den in dem Längsschlitz 20 befindlichen Verriegelungskörper 23 nach hinten. Dabei wird die Haltehülse 28 an ihrer Nase 29 ebenfalls nach hinten geschoben, wobei sie eine leichte Kippbewegung ausführt. Zwischen der Schiebehülse 25 und der Haltehülse 28 wird soviel Raum frei, daß die Kugel nach radial außen ausweichen kann, um das Schaftende des Werkzeugs 10 vorbeizulassen. Anschließend schnappt der Verriegelungskörper 23 in die geschlossene Verriegelungsnut 11 des Werkzeugs 10 ein. Dies wird durch die Druckfeder 33 bewirkt, die die Haltehülse 28 nach vorn drängt. In dieser Verriegelungsstellung überdeckt die Schiebehülse 25 den Verriegelungskörper 23 radial und die Haltehülse 28 sichert den Verriegelungskörper 23 mit ihrer Nase 29 in axialer Richtung.

Zum Entnehmen eines Nutenschaftwerkzeuges aus der Werkzeughalterung 8 wird mit der Betätigungshülse 26 die Schiebehülse 25 zum Bohrhammer hin zurückgezogen. Der Verriegelungskörper 23 ist nun radial frei und kann nach außen ausweichen, wenn das Werkzeug 10 herausgezogen wird. Danach drückt die Druckfeder 33 die Haltehülse 28 und die Schiebehülse 25 in ihre Ausgangsposition zurück.

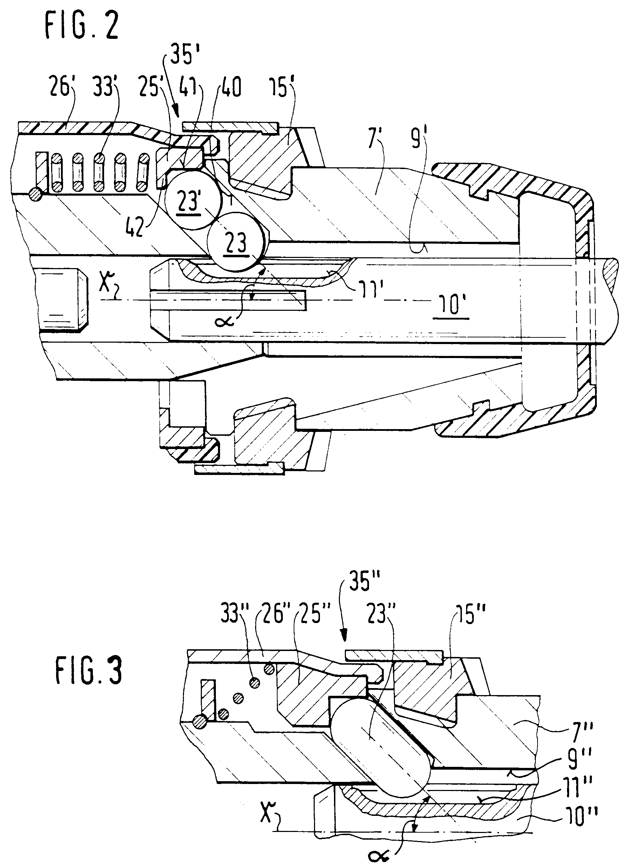

Das in Figur 2 dargestellte erste Ausführungsbeispiel der Erfindung unterscheidet sich vom Gegenstand der Stammanmeldung nur hinsichtlich seiner Werkzeugaufnahme 35'. Übereinstimmende Bauteile sind jeweils mit der gleichen, mit Hochstrich versehenen Bezugszahl bezeichnet. Der Grundkörper 7' enthält unmittelbar unter und neben dem Zahnkranz 15' eine Führungsbahn 40 von etwa kreisförmigem Querschnitt. Die Führungsbahn 40 ist unter einem Winkel α von ca. 30 Grad zur Achse x der Aufnahmebohrung 9' geneigt und verläuft, in ähnlicher Ausrichtung wie die Spannbacken 14 (Figur 1) schräg von hinten auf die Aufnahmebohrung 9' zu. In der Führungsbahn 40 befinden sich zwei Verriegelungskörper 23, 23' hintereinander. Der hintere obere Verriegelungskörper 23' stößt an eine Schiebehülse 25' an, die von einer Druckfeder 33' nach vorn gedrängt wird. Die Schiebehülse 25' hat im Bereich des Verriegelungskörpers 23' zwei rechtwinkelig zueinander angeordnete Halteflächen 41, 42 und dient als Sperrelement. Die Haltefläche 41 überdeckt den Verriegelungskörper 23' radial und die Haltefläche 42 stützt diesen axial von hinten. Auch die Schiebehülse 25' trägt eine Betätigungshülse 26' zum Entriegeln der Werkzeugaufnahme 35'.

Zum Einschieben eines Nutenschaftwerkzeugs 10' wird die Schiebehülse 25' an der Betätigungshülse 26' nach hinten gezogen. Die Verriegelungskugeln 23, 23' können nun nach schräg hinten zurückweichen, um das Schaftende des Werkzeugs 10 vorbeizulassen. Sobald die geschlossene Haltenut 11' des Werkzeugs 10' in den Bereich der Verriegelungskörper 23 riegelungskörper 23, 23' gelangt, werden diese nach dem Loslassen der Betätigungshülse 26' über die Druckfeder 33' und die Schiebehülse 25' wieder nach innen gedrängt und rasten in die Haltenut 11' ein. Ein Herausziehen des Werkzeugs 10' aus der Werkzeugaufnahme 35' ist in dieser Verriegelungsstellung nicht möglich, da beim Ziehen an dem Werkzeug 10' das Nutende eine Kraft auf den Verriegelungskörper 23, 23' in Richtung auf die Vorderwand der Führungsbahn 40 ausübt. In dieser Richtung können die Verriegelungskörper 23, 23' nicht ausweichen. Ebensowenig ist dies in radialer Richtung gegen die Schiebehülse 25' möglich. Zum Entnehmen des Nutenschaftwerkzeugs 10' muß also die Betätigungshülse 26' zurückgezogen werden, um ein Zurückweichen der Verriegelungskörper 23 23' zu bewirken. Im übrigen ist die Funktion der Werkzeugaufnahme 35' die gleiche wie bei dem anhand der Figur 1 beschriebenen Werkzeughalter.

Das zweite Ausführungsbeispiel gemäß Figur 3 entspricht dem ersten Ausführungsbeispiel, nur daß hier die beiden Verriegelungskörper 23', 23'' durch einen einzigen walzenförmigen Verriegelungskörper 23" ersetzt sind und die Schiebehülse 25'' etwas geändert wurde. Die Funktion entspricht genau der des ersten Ausführungsbeispiels.

## Patentansprüche

1. Handbohrmaschine, insbesondere Bohrhammer, mit einem drehend antreibbaren Werkzeughalter, der einen Grundkörper (7', 7'') mit darin angeordneter Aufnahmebohrung (9', 9'') für Bohr- und/oder Schlagwerkzeuge aufweist und der ein Backenfutter (16) zur Aufnahme von Werkzeugen mit Rundschaft und eine davon gesonderte Werkzeugaufnahme (35', 35'') für Werkzeuge mit Nutenschaft (10', 10'') hat, wobei die Werkzeugaufnahme (35', 35'') wenigstens einen radial verschiebbaren Verriegelungskörper (23, 23', 23'') aufweist, der in einer Verriegelungsstellung der Werkzeugaufnahme (35', 35'') in eine axial geschlossene Verriegelungsnut (11', 11'') eines darin eingesetzten Nutenschaftwerkzeugs (10', 10'') eingreift, dadurch gekennzeichnet, daß der wenigstens eine Verriegelungskörper (23, 23', 23'') auf einer schräg von hinten auf die Aufnahmebohrung (9', 9'') zulaufenden Führungsbahn (40) angeordnet ist, die als Bohrung mit einem etwa kreisförmigen Querschnitt ausgebildet ist.

2. Werkzeughalter für eine Handbohrmaschine, insbesondere für einen Bohrhammer, mit einem Grundkörper (7', 7'') mit darin angeordneter Aufnahmebohrung (9', 9'') für Bohr- und/oder Schlagwerkzeuge, die ein Backenfutter (16) zur Aufnahme von Werkzeugen mit Rundschaft und eine davon gesonderte Werkzeugaufnahme (35', 35'') für Werkzeuge mit Nutenschaft (10', 10'') hat, wobei die Werkzeugaufnahme (35', 35'') wenigstens einen radial verschiebbaren Verriegelungskörper (23, 23', 23'') aufweist, der in einer Verriegelungsstellung der Werkzeugaufnahme (35', 35'') in eine axial geschlossene Verriegelungsnut (11', 11'') eines darin eingesetzten Nutenschaftwerkzeugs (10', 10'') eingreift, dadurch gekennzeichnet, daß der wenigstens eine Verriegelungskörper (23, 23', 23'') auf einer schräg von hinten auf die Aufnahmebohrung (9', 9'') zulaufenden Führungsbahn (40) angeordnet ist.

3. Werkzeughalter nach Anspruch 2, dadurch gekennzeichnet, daß die Führungsbahn (40) im Grundkörper (7', 7'') als Bohrung mit einem etwa kreisförmigen Querschnitt ausgebildet ist.

4. Werkzeughalter nach Anspruch 2 oder 3, dadurch gekennzeichnet, daß die Führungsbahn (40) unter einem Winkel (α) von etwa 30 Grad zu einer Achse (X) der Aufnahmebohrung (9', 9'') geneigt verläuft.

5. Werkzeughalter nach einem der Ansprüche 2 bis 4, dadurch gekennzeichnet, daß der wenigstens eine Verriegelungskörper (23, 23', 23'') mit einer Schiebehülse (25', 25'') zusammenwirkt, die von einer Druckfeder (33', 33'') nach axial vorn in Richtung auf den wenigstens einen Verriegelungskörper (23, 23', 23'') gedrängt wird.

6. Werkzeughalter nach Anspruch 5, dadurch gekennzeichnet, daß die Schiebehülse (25', 25'') den wenigstens einen Verriegelungskörper (23, 23', 23'') in seiner Verriegelungsposition radial überdeckt.

7. Werkzeughalter nach Anspruch 5 oder 6, dadurch gekennzeichnet, daß die Schiebehülse (25', 25'') zwecks Entriegelung der Werkzeugaufnahme (35', 35'') mittels einer Betätigungshülse (26', 26'') entgegen der Federkraft (33', 33'') verschiebbar ist.

8. Werkzeughalter nach einem der vorhergehenden Ansprüche, dadurch gekennzeichnet, daß wenigstens ein walzenförmiger Verriegelungskörper (23'') vorgesehen ist.

9. Werkzeughalter nach Anspruch 8, dadurch gekennzeichnet, daß der wenigstens eine walzenförmige Verriegelungskörper (23'') auf seinem der Aufnahmebohrung (9'') zugewandten Ende halbkugelartig abgerundet ist.

10. Werkzeughalter nach einem der Ansprüche 2 bis 7, dadurch gekennzeichnet, daß zwei kugelförmige Verriegelungskörper (23, 23') vorgesehen sind, die hintereinander auf der Führungsbahn (40) angeordnet sind.

## Claims

1. Hand-held drilling machine, in particular a hammer drill, having a rotationally drivable tool holder which has a basic body (7', 7'') with location bore (9', 9'') arranged therein for drilling and/or percussion tools and which has a jaw chuck (16) for accommodating tools having a round shank and a tool carrier (35', 35'') separate therefrom for tools having a grooved shank (10', 10''), the tool carrier (35', 35'') having at least one radially displaceable locking body (23, 23', 23'') which, in a locking position of the tool carrier (35', 35''), engages in an axially closed locking groove (11', 11'') of a grooved-shank tool (10', 10'') inserted therein, characterized in that the at least one locking body (23, 23', 23'') is arranged on a guideway (40) which runs obliquely from the rear towards the location bore (9', 9'') and is designed as a bore of approximately circular cross-section.

2. Tool holder for a hand-held drilling machine, in particular for a hammer drill, having a basic body (7', 7'') with location bore (9', 9'') arranged therein for drilling and/or percussion tools, which has a jaw chuck (16) for accommodating tools having a round shank and a tool carrier (35', 35'') separate therefrom for tools having a grooved shank (10', 10''), the tool carrier (35', 35'') having at least one radially displaceable locking body (23, 23', 23'') which, in a locking position of the tool carrier (35', 35''), engages in an axially closed locking groove (11', 11'') of a grooved-shank tool (10', 10'') inserted therein, characterized in that the at least one locking body (23, 23', 23'') is arranged on a guideway (40) running obliquely from the rear towards the location bore (9', 9'').

3. Tool holder according to Claim 2, characterized in that the guideway (40) in the basic body (7', 7'') is designed as a bore of approximately circular cross-section.

4. Tool holder according to Claim 2 or 3, characterized in that the guideway (40) runs inclined at an angle (α) of about 30 degrees to an axis (X) of the location bore (9', 9'').

5. Tool holder according to one of Claims 2 to 4, characterized in that the at least one locking body (23, 23', 23'') interacts with a sliding sleeve (25', 25'') which is thrust axially forwards in the direction of at least one locking body (23, 23', 23'') by a compression spring (33', 33'').

6. Tool holder according to Claim 5, characterized in that the sliding sleeve (25', 25'') radially covers the at least one locking body (23, 23', 23'') in its locking position.

7. Tool holder according to Claim 5 or 6, characterized in that the sliding sleeve (25', 25''), for the purpose of unlocking the tool carrier (35', 35''), can be displaced against the spring force (33', 33'') by means of an actuating sleeve (26', 26'').

8. Tool holder according to one of the preceding claims, characterized in that at least one cylindrical locking body (23'') is provided.

9. Tool holder according to Claim 8, characterized in that the at least one cylindrical locking body (23'') is rounded off hemispherically on its end facing the location bore (9'').

10. Tool holder according to one of Claims 2 to 7, characterized in that two spherical locking bodies (23, 23') are provided which are arranged one behind the other on the guideway (40).

## Revendications

1. Perceuse motorisée à main, en particulier marteau percuteur comportant :
- un porte-outil entraîné en rotation, dont le corps (7, 7'') présente un alésage (9', 9'') de réception d'outils de perçage et/ou de percussion,
- le porte-outil est équipé d'un mandrin (16) recevant des outils à queue ronde et qui est doté d'un réceptacle spécifique (35', 35'') des outils à queue rainurée (10', 10''),
- le réceptacle (35', 35'') comporte au moins un organe de verrouillage (23, 23', 23'') à déplacement radial et qui, en position de verrouillage du réceptacle (35', 35'') se trouve en prise dans une rainure axiale fermée de verrouillage (11', 11'') d'un outil à queue rainurée (10', 10'') monté dans le porte-outil,
cette perceuse étant caractérisée en ce qu'
au moins un des organes de verrouillage (23, 23', 23'') se trouve sur une piste de guidage (40) en pente, à partir de l'arrière, vers l'alésage (9', 9'') constituant réceptacle, cette piste ayant la forme d'un perçage de section sensiblement circulaire.

2. Porte-outil destiné à une perceuse motorisée à main, notamment un marteau percuteur, dont le corps (7', 7'') est percé d'un alésage (9', 9'') de réception d'outils de perçage et/ou de percussion et qui porte un mandrin (16) recevant des outils à queue ronde et qui est doté d'un réceptacle spécifique (35', 35'') des outils à queue rainurée (10', 10''), ce réceptacle comportant au moins un organe de verrouillage (23, 23', 23'') qui, en position de verrouillage du réceptacle (35', 35'') se trouve en prise dans une rainure axiale fermée (11', 11'') de verrouillage d'un outil à queue rainurée monté dans le porte-outil,
caractérisé en ce qu'
au moins un des organes de verrouillage (23, 23', 23'') se trouve sur une piste de guidage (40) en pente, à partir de l'arrière, vers l'alésage (9', 9'') constituant réceptacle.

3. Porte-outil selon la revendication 2,
caractérisé en ce que
la piste de guidage (40) est constituée, à l'intérieur du corps (7', 7'') d'un alésage de section sensiblement circulaire.

4. Porte-outil selon la revendication 2 ou 3,
caractérisé en ce que
la piste de guidage (40) est inclinée selon un angle (α) d'environ 30 degrés par rapport à l'axe (x) de l'alésage de réception (9', 9'').

5. Porte-outil selon une des revendications 2 à 4,
caractérisé en ce qu'
au moins un des organes de verrouillage (23, 23', 23'') coopère avec une douille coulissante (25', 25'') qu'un ressort de pression (33', 33'') pousse axialement en avant, vers au moins un des organes de verrouillage (23, 23', 23'').

6. Porte-outil selon la revendication 5,
caractérisé en ce que
la douille coulissante (25', 25'') recouvre radialement au moins un des organes de verrouillage (23, 23', 23'') en position de verrouillage.

7. Porte-outil selon la revendication 5 ou 6,
caractérisé en ce que
la douille coulissante (25', 25''), pour déverrouiller le réceptacle d'outil (35', 35'') peut coulisser par l'intermédiaire d'une douille de manoeuvre (26', 26''), contre l'action d'une force élastique (33', 33'').

8. Porte-outil selon une des revendications précédentes,
caractérisé en ce qu'
il comporte au moins un organe de verrouillage (23'') en forme de rouleau.

9. Porte-outil selon la revendication 8,
caractérisé en ce qu'
au moins un des organes de verrouillage (23'') est arrondi en demi-sphère sur son extrémité située près de l'alésage de réception (9'').

10. Porte-outil selon une des revendications 2 à 7,
caractérisé en ce qu'
il comporte deux organes de verrouillage en forme de billes (23, 23') placés l'un derrière l'autre le long de la piste de guidage (40).
